# EUROPEAN PATENT APPLICATION

(11) **EP 2 072 558 A2**
(43) Date of publication of application: **24.06.2009**
(21) Application number: 08270004.8
(22) Date of filing: 30.07.2008
(51) Int. Cl.: C08G 63/183, C08G 63/189, C08G 63/78, C08L 67/02, B29D 22/00

(54) **A polymeric composition and a PET/PEN copolyester suitable for manufacturing pasteurizable containers**

(30) Priority: 31.07.2007 IN MU14572007
(71) Applicant: Futura Polyesters Limited, Mumbai 400 013 (IN)
(72) Inventor: Tammaji, Kulkarni Sanjay, 600 068, Tamil Nadu (IN); Krishnan, Palaniandavar Santhana Gopala, 600 068, Tamil Nadu (IN); Balasundaram, Dillyraj, 600 068, Tamil Nadu (IN)
(74) Representative: Williams, Paul Edwin

(57) **Abstract**

A polymeric composition suitable for manufacturing pasteurizable containers comprising, polyethylene terephthalate (PET) in the ratio of 80 to 95 mass % by mass of the total composition; polyethylene naphthalate (PEN) in the ratio of 20 to 5 mass % by mass of the total composition; tungsten trioxide in the range of 10 to 100 ppm by mass of the composition and particle size of 2 to 20 microns; and optionally a nucleating agent and a polycondensation catalyst.

## Description

The invention relates to a composition of co-polyesters and a method of preparation thereof.

Particularly this invention provides a composition suitable for making pasteurizable containers.

Polyethylene terephthalate (PET) is widely used in food packaging vessel, fiber, film, and transparent sheet. Because of its environmental advantages it is particularly used in food packaging vessels. PET is one of the most preferred polymers used for manufacture of bottles for carbonic beverages, juice, mineral water because of its numerous desirable attributes such as light weight when compared to glass, high transparency and shining, good gas impermeability and recycleability. Juices such as apple, grape, tomato, and mango are typically packaged in single serving cans, in multiple serving cans, bottles, tetra packs etc. Juices are subject to spoilage and discoloration from various bacteria, fermentation by yeast, and the breakdown of cellular products, enzymes and vitamins of the fruit. While preservatives are available to slow or stop such spoilage and discoloration, they can cause a detectable change in the taste of the juice. Nowadays, consumers are more aware of food additives before than ever and prefer natural preservation versus chemical preservation. Various natural ways of extending the shelf life of juices without using preservatives have been tried, for example in hot filled, the finished beverage with pH < 4.5 is heated to ∼ 88°C and is introduced in the container which is capped subsequently. The contents are cooled afterwards.

Pasteurization - The beverage is filled into the container, capped and then pasteurized by passing through a tunnel with hot water (70 to 90°C) spray and holding at the required temperature of 60-75°C for a specified time followed by a cooling gradually to ambient temperature in a tunnel by showering cold water. A typical example is beer.
Aseptic Filling - The beverage particularly those with pH > 4.5 is sterilized to high temperature (120 to 140°C) for a short period of time and then rapidly cooled without the introduction of microorganisms. The process requires a "clean room" and is a more expensive process with expensive machineries. Retort Processing - It is common for unpreserved beverages with a pH > 4.0. The already filled container is subjected to ∼ 120 - 140°C for a specific time and cooled. In this process essential nutrients, taste and flavor may get destroyed.

Depending on the contents and the container each one has its own merits and demerits. But it is always advisable to have a shorter heat history while filling the beverage like in pasteurization and aseptic filling. Compared to hot filling, in these two methods the thermal history is shorter as the product is immediately cooled down after pasteurization or aseptic filling and as a result these drinks lose less of their original content and taste. Also the Polyethylene Terephthalate (PET) bottles, containing suitable additives/nucleating agents/comonomers, have to be heat set to withstand the high temperatures of around 88°C and also have to be specially designed with vacuum panels to prevent the distortions which happen when hot filled bottles are cooled. A standard PET bottle can not withstand the temperature, pressure, shrinkage and vacuum during the hot fill process. The special resins and the heat setting process of the bottles with a special design increases the price of hot fill bottles when compared to bottles made for pasteurization or aseptic filling.

Although PET is a very common material for packaging applications it does not meet the need for juice and beverage filling applications due to its low glass transition temperature Tg (75 - 78°C) limiting its usage to non hot filling not having adequate gas barrier property.
Compared to PET, Polyethylene Naphthalate (PEN) has a higher Tg (119-124°C) ∼ 40°C higher than PET, and superior barrier properties e.g., lower permeability to oxygen, ∼ 7 times less than PET, and it also has a higher UV absorption cutoff and chemical resistance. PEN would be a very useful polymer for bottling applications, including hot filling of juices, but unfortunately it is not price competitive as it is 3 - 4 times more expensive than PET.
In order to incorporate the performance advantages of PEN without over engineering the container, blends, alloys and copolymers of PEN and PET have been made to provide a material that is cheaper than PEN but has a higher Tg and better barrier properties than PET. PET and PEN copolymers are produced either with DMT or PTA as the raw material along with NDC or NDA partially substituting DMT or PTA to the required level of naphthalate in the PET and PEN copolyester. The copolyester can also be produced by the direct addition of PEN oligomer or polymer in the form of chips / powder or melt either after esterification or during polycondensation or just before the end of polycondensation. As PEN has a higher melting point it is recommended to add it in the form of its powder to take advantage of its faster melting and quicker reaction. Having higher melting point and thermal stability PEN powder will not decompose to black spots in the final polymer. Though the blends of PET and PEN are more versatile than copolymers since their melts are nonhomogeneous the blends needs to be processed under conditions of adequate transesterifications to achieve homogenity. Lack of homogenity leads to inconsistency in the properties resulting in non transparent hazy molded products. On the other hand excessive transesterification promotes randomization of PET and PEN components resulting in the material losing its blend characteristics yielding a corresponding copolymer composition product. PET and PEN copolymer compositions with ∼ < 15 wt.% or > 85 wt.% naphthalate content will undergo strain induced crystallization giving a crystalline melting point. PET and PEN compositions where the naphthalate content lies - between 15 and 85 wt.% remain amorphous.

US 6586558, 6395865, 6194536 and 5902539 discloses a process for making PET/PEN blends for transparent articles by controlling the intrinsic viscosity (I.V.) and tranesterification by the addition of an ethylene glycol (EG) compound.

US 5612423, 5594092, and 5539078 disclose a process for manufacturing PET/PEN co polyesters with naphthalate content ranging between 2 and 10 mole%.

US 5628957 describes a method of forming multilayer container consisting of a layer of PEN, copolymer or blend of PET/PEN with the PEN ratio maintained at 1 to 20% or 80 to 100%

KR 100351374, 20020012966 and 100325120 disclose a polyester-based bottle for a drink and its preparation method. The method comprises the step of blow molding the molten composition of PET/PEN co polyesters with 1-15 mole% or 1 -50 mole % of PEN. The containers made by using aforesaid copolyester composition are used for hot fill applications.

US 20050033012 discloses high temperature resistant fiberfill comprising PETN fibers. Here the PETN is made by reacting DMT, NDC and EG.

KR 20030057797 describes PET/PEN resin composition containing 1-40 parts PEN and 99-60 parts of PET. The aforesaid composition is employed for making biaxially stretched polyester bottles.

One of the objects of the present invention is to provide a composition comprising co polyester with enhanced thermal stability.

Another object of the present invention is to provide copolyester which has a better gas barrier property.

Yet another object of the present invention is to provide a copolyester which has a 375 nm UV absorption cutoff.

Yet another object of the present invention is to provide a process for the preparation the copolyester resin composition which gives consistent properties.

Yet another object of the present invention is to provide a copolyester resin composition suitable for jars for bulk filling of mineral water.

Yet another object of the present invention is to provide a copolyester resin composition suitable for pasteurizable and aseptic filling containers.

Still another object of the present invention is to provide a copolyester resin composition with enhanced barrier properties.

Still further object of the present invention is to provide a copolyester resin which has a increased mechanical properties, like tenacity of the fibers or the impact strength of the containers/bottles.

One more object of the present invention is to provide a copolyester resin suitable for extrusion blow molding (EBM) to make odd shaped bottles.

In accordance to the present invention there is provided a polymeric composition suitable for manufacturing pasteurizable containers comprising:
- polyethylene terephthalate (PET) in the ratio of 80 to 95 mass % by mass of the total composition;
- polyethylene naphthalate (PEN) in the ratio of 20 to 5 mass % by mass of the total composition;
- tungsten trioxide in the range of 10 to 100 ppm by mass of the composition ( > 30 ppm are preferred in thicker preforms meant for bulk volume jars) and particle size of 2 to 20 microns; and
- optionally a nucleating agent and a polycondensation catalyst.

Preferably, the ratio of PET to PEN is 95 mass % to 5 mass%.

Preferably, the ratio of PET to PEN is 90 mass % to 10 mass%.

Preferably, the ratio of PET to PEN is 80 mass % to 20 mass%.

Preferably, the nucleating agent is at least one nucleating agent selected from a group of nucleating agents consisting of sodium stearate, sodium benzoate, sodium acetate, potassium stearate, potassium benzoate, silica nanoparticles, sorbitol based chemicals, micronized sodium benzoate, micronized potassium benzoate, micronized sodium stearates, micronized potassium stearates and talc.

Preferably, the nucleating agent is silica nanoparticles in the range of 200 to 400 ppm and particle size of 40 to 50 nm or is sodium acetate in the range of 50 to 100 ppm.

In accordance with one preferred embodiment of the invention the nucleating agent is a mixture of sodium acetate in the range of 50 to 100 ppm and silica nanoparticles in the range of 200 to 400 ppm and particle size of 40 to 50 nm.

Typically, the polycondensation catalyst is at least one polycondensation catalyst selected from a group of polycondensation catalysts consisting of antimony, titanium and germanium based compounds or potassium titanium oxide oxalate.

Preferably, the polycondensation catalyst is antimony triacetate in the range of 150 to 300 ppm.

Preferably, the polycondensation catalyst is germanium dioxide in the range of 5 to 40 ppm.

In accordance with one preferred embodiment of the invention the polycondensation catalyst is a mixture of antimony triacetate in the range of 150 to 300 ppm and antimony triacetate in the range of 150 to 300 ppm.

In accordance with this invention a preform having a polymeric composition is obtained.

In accordance with this invention a pasteurizable container having a polymeric composition is obtained.

In accordance with the invention there is provided a method for making PET/PEN copolyester for manufacture of pasteurizable containers comprising the following steps:
- mixing pure terephthalic acid and monoethylene glycol in an esterification reactor and optionally adding a nucleating agent, a polycondensation catalyst and colorants;
- mixing naphthalene dicarboxylic acid (NDA) or Naphthalene dicarboxylate (NDC) in an esterification reactor for in-situ PEN formation;
- conducting the esterification reaction at a temperature of 240 to 265°C for 190 minutes to obtain an esterified pre-polymer;
- transferring the esterified pre-polymer to a polycondensation reactor;
- subjecting the pre-polymer to polycondensation at a temperature of 265-292°C under pressure of 5-15 mbar for 180 minutes to obtain a molten amorphous polymer;
- extruding the molten amorphous polymer under nitrogen pressure to form chips; and
- subjecting the resulting chips to solid state polymerization to attain an I.V. greater than 0.70 dL/g

In accordance with this invention there is also provided a method for making pasteurizable containers comprising the following steps:
- subjecting the PET/PEN copolyester of the present invention to injection molding to obtain a preform; and
- subjecting the preform to stretch blow molding to form a pasteurizable container.

The present invention deals with the PET-PEN copolyester preparation preferably through a melt polymerization route instead of the chips blending route as the former method gives consistent quality. It has been observed that to get the same properties of the copolyester more PEN has to be used in the dry blending route in comparison with the melt polymerization route.

The present invention provides a thermally stable copolyester resin composition with enhanced gas barrier and UV barrier properties. The copolyester resin composition comprises a random copolymer of Polyethylene Terephthalate (PET) and Polyethylene Naphthalate (PEN), the naphthalate content of which may vary between 1 and 20 wt.%. The present invention also provides a process for modification of the copolyester resin composition with appropriate additives to form amorphous PET - PEN copolyester pellets by melt polymerization. The PET - PEN copolyester resin is subjected to Solid State Polymerization (SSP) to increase the I.V. and injection molded to preforms which are further stretch blown into containers having the extended gas barrier and U.V. barrier properties suitable for juice and beverage filling and fit for pasteurization and aseptic filling and also for bulk filling jars or extrusion blow molded (EBM) to the required containers.

In accordance with this invention there is provided a polymeric composition suitable for manufacturing pasteurizable containers comprises PET in the ratio of 80 to 95% by mass of the total composition, PEN in the ratio of 5 to 20% by mass of the total composition and clear fast reheat additives typically but not limited to tungsten, tungsten trioxide, tungsten carbide, molybdenum oxide. Preferably, the clear fast reheat additives are in the range of 10 to 100 ppm by mass of the composition and have a particle size of 2 to 20 microns.

In accordance with this invention the additives are added to the copolyester during melt polymerization at different stages like esterification, prepolymerization or polycondensation.

To the polymeric composition optionally a nucleating agent along with heavy metal or non heavy metal catalysts and gas barrier additives are added. The nucleating agent is preferably at least one nucleating agent selected from a group of nucleating agents consisting of sodium stearate, sodium benzoate, sodium acetate, potassium stearate, potassium benzoate, silica nanoparticles, sorbitol based chemicals, micronized sodium benzoate, micronized potassium benzoate, micronized sodium stearates, micronized potassium stearates and talc.

The nucleating agent can be silica nanoparticles in the range of 200 to 400 ppm and particle size of 40 to 50 nm and sodium acetate in the range of 50 to 100 ppm.

The polycondensation catalyst is preferably at least one polycondensation catalyst selected from a group of polycondensation catalysts consisting of antimony, titanium and germanium based compounds or potassium titanium oxide oxalate.

The polycondensation catalyst can either be antimony triacetate in the range of 150 to 300 ppm or germanium dioxide in the range of 5 to 40 ppm. Alternatively, the polycondensation catalyst can be a mixture of antimony triacetate/trioxide in the range of 150 to 300 ppm.

In accordance with this invention a preform is obtained by using the aforementioned polymeric composition.

In accordance with this invention a pasteurizable container is obtained by using the aforementioned polymeric composition.

In accordance with the present invention, there is also provided a method for making PET/PEN copolyester for manufacture of pasteurizable containers.

A paste of a pure terephthalic acid and monoethylene glycol is preferably mixed in an esterification reactor along with the selected additives in the ratio of about 70:30 by wt. and the paste is charged into an esterifier. The paste also comprises a polycondensation catalyst, preferably antimony (Sb) or Titanium (Ti) based, and germanium compounds along with suitable clear fast reheat (CFRH) additives like oxides and carbides of transition metals like tungsten and molybdenum, colorants like cobalt acetate and organic toners like 8,9,10,11-tetrachloro-12H-phthaloperin-12-one (Red Toner) and 1,4-bis(mesitylamino)anthraquinone (Blue Toner).

In a preferred embodiment NDC 0-20% with respect to the mass of the composition along with the requisite quantity of manganese catalyst are added either initially if DMT is used or after the esterification process if PTA is used. The product is pre-polymerized in a pre-polymerization reactor and transferred to the polycondensation reactor for in-situ formation of PEN. The esterification reaction is carried out at temperature of 240 to 265°C for 190 minutes to obtain an esterified pre-polymer. The pre-polymer so obtained after esterification is transferred to a polycondensation reactor. The polycondensation reaction is carried out at a temperature of 265-292°C under pressure of 5-15 mbar for 180 minutes to obtain a molten amorphous polymer. Prior to the transfer of prepolymer into the polycondensation reactor, heat stabilizers like phosphorous acid or phosphoric acid or triethyl phosphonoacetate are added to the prepolymer melt. The molten amorphous polymer so obtained is then subjected to extrusion under nitrogen pressure to form pellets. The pellets are then subjected to solid state polymerization to attain an I.V. greater than 0.70 dL/g

In accordance with a preferred embodiment of the invention, a process for making the copolyester resin composition of PET with PEN is done either by adding the appropriate quantity of Naphthalene Dicarboxylate (NDC), or Naphthalene Dicarboxylic Acid (NDA) or the PEN polymer along with the raw materials viz. DMT or PTA and MEG in the beginning of esterification or after the esterification or in the polycondensation reactor. NDC addition after esterification is preferred if PTA is used as it retains the melt characteristics and prevents it from being inactive.

In accordance with this invention, there is also provided a method for making pasteurizable containers comprising the following steps:
The PET-PEN copolyester containing the additives is subjected to injection molding to obtain a preform. The preform so obtained is then subsequently subjected to stretch blow molding to from form a pasteurizable container with enhanced thermal stability, improved gas and UV barrier properties and flavor retention or to bulk filling containers or extrusion blow molded to the required containers. For bulk filling containers/jars, thick walled preforms up to 9 mm thickness are used.

In accordance with another embodiment of the invention, Polyethylene naphthalate resins (PEN) are added instead of NDC. Before reaching the required IV, say 20-40 minutes before completion of polycondensation, PEN chips are added to the PET melt and further polymerized. After reaching the required intrinsic viscosity (I.V.) the molten polymer is extruded into amorphous PET-PEN copolyester chips and subjected to solid state polymerization (SSP) to increase the IV.

The PET-PEN co polyester SSP resin can be used for injection molding of the preforms and are then stretch blow or extrusion blow molded to make bottles. These bottles are then characterized for their clarity, thermal stability, crystallinity, gas barrier properties, U.V. stability and the like.

In accordance with another preferred embodiment of the present invention, the %wt. ratio of PEN to PET varies between 1: 99 and 20: 80 in the polymeric composition.

In a further preferred embodiment of the present invention, the I.V. of the base PET-PEN copolyester resins is in the range of 0.70 - 0.88 dL/g in the PET-PEN copolyester resin.

In accordance with another preferred embodiment of the present invention, a fiber is manufactured from PETN5, 10 & 20 by melt spinning. Such fibers are used for fiberfill applications as they have good bulk properties. The heat of fusion values, as determined by DSC thermal analysis, of the PETN resins are lower when compared to PET or PEN. This results in superior mechanical properties of the PETN resins in their applications. Increased tenacity of the fibers or increased impact strength and top load withstandability of the containers/bottles are the typical examples.

Polyester fibers when used for textile applications the fibers in fabric have a tendency to fibrillate. Fibrillation is the peeling back or splintering or longitudinal splitting along the length of the fiber to form tiny hairs on their surface. It is known that fibrillation can be eliminated or minimized by incorporating branching agents, cross linking agents, polyolefins and certain cyclic compounds in the resin recipe. In the present invention a combination of a chain extender functional additive (Joncryl ADR 4370 S made by BASF Corpn.) and LDPE powder are used in the PETN recipe to improve the antifibrillation property in the fiber.

The quality of the co-polyester formed by melt polymerization is also superior and consistent in quality as compared to the dry blending. Dry blending of PET/PEN requires excessive heat input to melt the PEN and this result in increase of acetaldehyde and haze as well as yellowing of the copolyester resin. By melt polymerization method of copolyester preparation any proportion of PET and PEN ratio can be easily achieved. In contrast to dry blending lower I.V. (- 0.4) chips can be used in melt polymerization due to its easy miscibility and faster tranesterification with PET.

Due to the addition of clear FRH additive thicker wall containers are possible without losing clarity, helping in uniform blowing of the preform to containers. The presence of clear FRH additive prevents the blackish/greyish tinge normally seen with conventional FRH additives.

Due to the higher melt viscosity of the present melt copolymerized PET-PEN the resin composition can also be used for containers having intricate contours by the EBM process. Containers made from the co polyester resin composition of PET-PEN with 5 wt. % withstand the tunnel pasteurization at 75°C for ten minutes by cold set blowing.

The invention will now be described with the help of the following non-limiting examples.

### Example 1: PETN5 Resin

9.85 kg of pure terephthalic acid and 4.23 kg of monoethylene glycol were taken in an esterification vessel, in 1:1.15 molar ratio. To this, nucleating agent, sodium salicylate 20 ppm (0.2 g) was added. Polymerization catalyst antimony trioxide 300 ppm as Sb (3.6 g), colorants cobalt acetate 20 ppm as Co (1.01 g), red toner 1.5 ppm (0.018 g) and blue toner 1.2 ppm (0.014 g) were further added to the above mixture. 5 % of NDC (0.50 kg) was also added after esterification for *in-situ* PEN formation. The esterification reaction was carried out at a temperature of 250°C for 190 minutes. The esterified pre-polymer was then transferred to the polycondensation reactor.

Before commencing polymerization, triethyl phosphonoacetate 50 ppm as P (TEPA, 4.34 g), Ortho phosphoric acid 20 ppm as P and CFRH additive viz. oxide of transition metal 10 ppm (0.12 g) were added. The polymerization was conducted at a temperature of 265 - 287/292°C (the former was the final poly temperature and the latter was the peak poly temperature) under 5-15 mbar for 180 minutes. After the required torque was reached, the molten amorphous polymer PETN5 was extruded under nitrogen pressure and collected as chips. The resulting chips of PETN5 with I.V. ∼ 0.6 dL/g were subjected to solid state polymerized to I.V.∼ >0.70 dL/g.
The PETN5 copolyester was then subjected to injection molding to obtain a preform. A preform was subjected to stretch blow molding to form a pasteurizable container and analyzed for their characteristics.

The quality parameters of the amorphous PETN5 chips are given in Table - 1 and SSP chips in Table - 2 from the trials conducted in the pilot plant and the production plant.

**TABLE - 1: PETN5 Amorphous Copolyester Chips Properties**

| **Properties** | **Pilot Trial 1@** | **Pilot Trial 2** | **Plant Trial 1** | **Plant Trial 2** |
|---|---|---|---|---|
| **I.V. dL/g** | 0.64 | 0.57 | 0.57 | 0.58 |
| **CIE Lab L - as such** | 73.3 | 69.9 | 73.3 | 73.9 |
| **CIE Lab a* - as such** | -0.5 | -1.4 | -1.1 | -1.8 |
| **CIE Lab b* - as such** | -5.7 | -4.0 | -5.4 | -5.2 |
| **COOH No. meq/kg** | 23 | 18 | 24 | 12 |
| **DEG, wt.%** | 1.6 | 1.38 | 1.22 | 1.17 |
| **Dissolution Haze, NTU** | 1.7 | 1.5 | - | 7.3 |
| **Tg °C** | 80.6 | 79.9 | 80.8 | 81.4 |
| **Tch°C** | 158.2 | 153.8 | 148 | 149.1 |
| **Tm°C** | 241.2 | 242.1 | 244.2 | 244.3 |

| | | | | |
|---|---|---|---|---|
| @- In Pilot Trial 1 PEN chips were added instead of NDC addition. The I.V.of PEN chips was in the range of 0.40 to 0.60 dL/g. The lower range was better as it disperses and mixes well in the prepolymer formed and reacts faster. Addition of PEN as a powder instead of the chips also helps in hastening the reaction. Tg = Glass transition temperature Tch = Exothermic crystallization temperature in the heating cycle of DSC Tm = Melting point in the 2^{nd} heating cycle of DSC | | | | |

**TABLE - 2 : PETN5 SSP Copolyester Chips Properties - From a typical Plant Trial**

| **Properties** | **Plant Trial Values** |
|---|---|
| **I.V. dL/g** | 0.76 |
| **CIE Lab ValuesL** | 77.3 |
| **CIE Lab a*** | -1.6 |
| **CIE Lab b*** | -3.9 |
| **COOH No. meq/kg** | 9 |
| **DEG, wt.%** | 1.20 |
| **Tg, °C** | 81.5 |
| **Tch, °C** | 153.7 |
| **Tm, °C** | 242 |

Following tables give the details of manufacture of PETN5 in the commercial plant along with the amorphous and SSP properties of the resin.

**TABLE -3: Manufacture of PETN5 Copolyester. Batch Weight 2500 kg**

| **Sr. No.** | **Additives** | **Quantity** | **Unit** | **PPM** | **Addition Point** |
|---|---|---|---|---|---|
| 1. | Sodium Acetate | 187.5 | g | 75 | Along with the addition of PTA and MEG paste |
| 2. | Germanium Dioxide | 360 | g | 10 | After the addition of PTA and MEG paste |
| 3. | Nyacol Silica MEG slurry | 833 | g | 333 | After the addition of PTA and MEG paste |
| 4. | Antimony triacetate (Powder) | 598 | g | 200 | After the addition of PTA and MEG paste |
| 5. | Cobalt Acetate (Powder) | 212 | g | 20 | After the addition of PTA and MEG paste |
| 6. | Red Toner Powder | 2.50 | g | 1 | After the addition of PTA and MEG paste |
| 7. | Blue Toner Powder | 2.50 | g | 1 | After the addition of PTA and MEG paste |
| 8. | Ortho Phosphoric Acid (OPA) as, P | 279 | g | 30 | In Esterifier after completion of esterification |
| 9. | Tungsten trioxide 7% solution | 714.3 | g | 20 | In Esterifier after OPA addition and held for 2 minutes prior to transfer to the poly reactor |
| 10. | PEN Chips | 125 | kg | 5% | Addition in Poly Reactor under nitrogen and held for 3 minutes before evacuation |

**TABLE -4: PETN5 COPOLYESTER RESIN PROPERTIES**

| **PARAMETERS** | **VALUES** | |
|---|---|---|
| | **AMORPHOUS** | **SSP** |
| **I.V., dL/g** | 0.600 ± 0.01 | 0.770 ± 0.01 |
| **CIE Lab Color Values L** | Min.75 | Min.80 |
| **CIE Lab a*** | -1.0 ± 0.2 | -1.2 ± 0.2 |
| **CIE Lab b*** | -6.5 ± 0.5 | -2.5 ± 0.5 |
| **COOH, meq/kg** | Max. 35 | Max.30 |
| **DEG, wt.%** | Max. 1.2 | Max.1.2 |

PETN5 copolyester resin was used for making pasteurizable containers suitable for fruit juices, beverages, ketchup etc. Before processing the PETN5 granules were thoroughly dried to a residual moisture content of < 50 ppm using dehumidified circulation system. The dried resin was converted to bottles by the ISBM process and blowing was by cold set. These bottles withstand tunnel pasteurization at 75°C for 10 minutes. There was no rocking at the bottom and the shrinkage was less than 2 %. **Example 1,** Trial 2 in the pilot plant was repeated with additional additives viz. Joncryl ADR 4370S (50 ppm) and LDPE powder (0.5%). The resulting PETN5 resin on conversion to fiber and fabric showed less fibrillation when compared to the PETN5 resin without these special additives.

### Example 2:PETN10 Co-Polyester Resin

(1340 kg) of pure terephthalic acid and (601 kg) of monoethylene glycol were taken in an esterification vessel, in 1:1.15 molar ratio. To this, nucleating agent, sodium acetate 75 ppm (135 g) and silica nanoparticles as a 30% MEG slurry (333 ppm) (599 g) were added. Polymerization catalyst antimony triacetate 150 ppm as Sb (323 g), colorants cobalt acetate 20 ppm as Co (153 g), red toner 1.4 ppm (2.52 g) and blue toner 1.5 ppm (2.70 g) were further added to the above mixture. 10 % of PEN powder (180 kg) was also added after esterification for *in-situ* PEN formation. The esterification reaction was carried out at a temperature of 250°C for 190 minutes. The esterified pre-polymer was then transferred to the polycondensation reactor.

Before commencing polymerization, triethyl phosphonoacetate 20 ppm as P (TEPA, 267 g), Ortho phosphoric acid 129 g, 20 ppm as P and tungsten trioxide as a CFRH additive metal 20 ppm (36 g) were added. 93 g of potassium titanium oxide oxalate ( 7 ppm) was added as a poly catalyst at this stage. The polymerization was conducted at a temperature of 265 - 287/292°C (the former was the final poly temperature and the latter was the peak poly temperature) under 5-15 mbar for 180 minutes. After the required torque was reached, the molten amorphous polymer PETN10 was extruded under nitrogen pressure and collected as chips. The resulting chips of PETN10 with I.V. ∼ 0.6 dL/g were subjected to solid state polymerized to attain an I.V.∼ 0.83 dL/g.

PETN10 resin of I.V. ∼ 0.83 dL/g was used for making ISBM jars of 20 to 30 litre capacity for bulk filling of mineral water. Before processing, the PETN10 resin was thoroughly dried such that the moisture was < 50 ppm and subsequently converted to container/jar by ISBM method.

The following tables give the details of manufacturing PETN10 copolyester resin and the properties of the amorphous and SSP resin properties.

**TABLE -5: Manufacture of PETN10 Copolyester. Batch Weight 1800 kg**

| **Sr. No.** | **Additives** | **Quantitry** | **Unit** | **PPM** | **Addition Point** |
|---|---|---|---|---|---|
| 1. | Sodium Acetate | 135 | g | 75 | Along with the addition of PTA and MEG paste |
| 2. | Nyacol Silica MEG slurry | 599 | g | 333 | After the addition of PTA and MEG paste |
| 3. | Antimony triacetate (Powder) | 323 | g | 150 | After the addition of PTA and MEG paste |
| 4. | Cobalt Acetate (Powder) | 153 | g | 20 | After the addition of PTA and MEG paste |
| 5. | Red Toner Powder | 2.52 | g | 1.4 | After the addition of PTA and MEG paste |
| 6. | Blue Toner Powder | 2.70 | g | 1.5 | After the addition of PTA and MEG paste |
| 7. | Tetraethyl Phosphono acetate (TEPA), as P | 267 | g | 20 | In Esterifier just before monomer transfer |
| 8. | Ortho Phosphoric Acid (OPA), as P | 129 | g | 20 | In Esterifier after TEPA addition |
| 9. | PEN Powder | 180 | kg | 10% | Addition in Esterifier after esterification under nitrogen and held until melting and dissolution before evacuation. |
| 10. | Tungsten trioxide | 36 | g | 20 | Prior to monomer transfer and held for 3 minutes for mixing. |
| 11. | Potassium Titanium Oxide Oxalate | 93 | g | 7 | In the polycondensation reactor after monomer transfer. |

**TABLE -6: PETN10 COPOLYESTER RESIN PROPERTIES**

| **PARAMETERS** | **VALUES** | |
|---|---|---|
| | **AMORPHOUS** | **SSP** |
| **I.V., dL/g** | 0.600 ± 0.01 | 0.830 ± 0.01 |
| **CIE Lab Values L** | Min.75 | Min.80 |
| **CIE Lab a*** | -1.0 ± 0.2 | -1.2 ± 0.2 |
| **CIE Lab b*** | -5.5 ± 0.5 | -2.5 ± 0.5 |
| **Tg** | 84 ± 1°C | - |
| **Tm** | 234 ± 1°C | - |
| **COOH, meq/kg** | Max. 35 | Max.30 |
| **DEG, wt.%** | Max. 1.2 | Max.1.2 |

### Example 3:PETN20 Copolyester Resin

(1590 kg) of pure terephthalic acid and (682 kg) of monoethylene glycol were taken in an esterification vessel, in 1:1.15 molar ratio. To this, Polymerization catalyst antimony triacetate 180 ppm as Sb (495g) and germanium dioxide (30 ppm) as Ge (994 g) were added. Colorants cobalt acetate 8 ppm as Co (78 g), red toner 2.2 ppm (5.06 g) and blue toner 2.0 ppm (4.60 g) were further added to the above mixture. 20 % of PEN powder (460 kg) was also added after esterification for *insitu* PEN formation. The esterification reaction was carried out at a temperature of 250°C for 190 minutes. The esterified pre-polymer was then transferred to the polycondensation reactor.

Before commencing polymerization, triethyl phosphonoacetate (50 ppm) as P (TEPA, 681 g), Ortho phosphoric acid 132 g (20 ppm) as P and tungsten oxide as a CFRH additive 20 ppm (46 g) were added. The polymerization was conducted at a temperature of 265 - 287/292°C (the former was the final poly temperature and the latter was the peak poly temperature) under 5-15 mbar for 180 minutes. After the required torque was reached, the molten amorphous polymer PETN20 was extruded under nitrogen pressure and collected as chips. The resulting chips of PETN20 with I.V. ∼ 0.6 dL/g were subjected to solid state polymerized to I.V.∼ 1.0 dL/g.

PETN20 resin of I.V. ∼ 1.0 was thoroughly dried to a moisture level of < 50 ppm and was subjected to Extrusion Blow Molding (EBM) process to make bottles of odd shapes as per the required application. These bottles have good clarity and pass the drop test.

The following tables give the details of manufacture of PETN20 resin and the properties of the amorphous and SSP resin.

**TABLE -7: Manufacture of PETN20 Copolyester. Batch Weight 2300 kg**

| **Sr.No.** | **Additives** | **Quantitry** | **Unit** | **PPM** | **Addition Point** |
|---|---|---|---|---|---|
| 1. | Antimony triacetate (Powder) | 495 | g | 180 | After the addition of PTA and MEG paste |
| 2. | Cobalt Acetate (Powder) | 78 | g | 8 | After the addition of PTA and MEG paste |
| 3. | Germanium Dioxide | 994 | g | 30 | After the addition of PTA and MEG paste |
| 4. | Red Toner Powder | 5.06 | g | 2.2 | After the addition of PTA and MEG paste |
| 5. | Blue Toner Powder | 4.60 | g | 2.0 | After the addition of PTA and MEG paste |
| 6. | Tetraethyl Phosphono acetate (TEPA), as P | 681 | g | 50 | In Esterifier just before monomer transfer |
| 7. | Ortho Phosphoric Acid (OPA), as P | 132 | g | 20 | In Esterifier after TEPA addition |
| 8. | PEN Powder | 460 | kg | 20% | Addition in Esterifier after esterification under nitrogen and held until melting and dissolution before evacuation. |
| 9. | Tungsten trioxide | 46 | g | 20 | Prior to monomer transfer and held for 3 minutes for mixing |

**TABLE -8: PETN20 COPOLYESTER RESIN PROPERTIES**

| **PARAMETERS** | **VALUES** | |
|---|---|---|
| | **AMORPHOUS** | **SSP** |
| **I.V., dL/g** | 0.570 ± 0.01 | 1.00 ± 0.01 |
| **L CIE Lab** | Min.75 | Min.80 |
| **CIE Lab a*** | -1.0 ± 0.2 | -1.2 ± 0.2 |
| **CIE Lab b*** | -7.0 ± 0.5 | -4.5 ± 0.5 |
| **COOH, meq/kg** | Max. 35 | Max.30 |
| **DEG, wt.%** | Max. 1.5 | Max.1.*5* |

Fibres made from PETN5, 10 & 20 by melt spinning can also be used for fibrefill applications as the fibres have good bulk properties.
The heat of fusion values, as determined by DSC thermal analysis, of the PETN resins are lower when compared to PET or PEN. This results in superior mechanical properties of the PETN resins in their applications. Increased tenacity of the fibers or incresaed impact strength and top load of the containers/bottles are typical examples. Table-9 gives the comparison of the heat of fusion values.

**TABLE -9: Heat of Fusion Values (in J/g) for PET, PEN and PETN Resin**

| **Sr.No.** | **RESIN TYPE** | **MELTING POINT, Tₘ₁, °C** | **HEAT OF FUSION, J/g** | **Impact Strength (Kg-cm/cm) ASTM D-256 (without notch)** |
|---|---|---|---|---|
| 1. | **PET** | 254 | 54 | 56 |
| 2. | **PEN** | 268 | 68 | 63 |
| 3. | **PETN5** | 242 | 49 | 69 |
| 4. | **PETN10** | 234 | 47 | 75 |
| 5. | **PETN20** | 224 | 41 | 84 |

While considerable emphasis has been placed herein on the specific structure of the preferred embodiment, it will be appreciated that many alterations can be made and that many modifications can be made in the preferred embodiment without departing from the principles of the invention. These and other changes in the preferred embodiment as well as other embodiments of the invention will be apparent to those skilled in the art from the disclosure herein, whereby it is to be distinctly understood that the foregoing descriptive matter is to be interpreted merely as illustrative of the invention and not as a limitation.

## Claims

1. A polymeric composition suitable for manufacturing pasteurizable containers comprising:
a. polyethylene terephthalate (PET) in the ratio of 80 to 95 mass % by mass of the total composition;
b. polyethylene naphthalate (PEN) in the ratio of 20 to 5 mass % by mass of the total composition;
c. tungsten trioxide in the range of 10 to 100 ppm by mass of the composition and particle size of 2 to 20 microns; and
d. optionally a nucleating agent and a polycondensation catalyst.

2. A polymeric composition as claimed in claim 1, wherein the ratio of PET to PEN is 95% to 5% by mass.

3. A polymeric composition as claimed in claim 1, wherein the ratio of PET to PEN is 90% to 10% by mass.

4. A polymeric composition as claimed in claim 1, wherein the ratio of about PET to PEN is 80% to 20% by mass.

5. A polymeric composition as claimed in claim 1, wherein the nucleating agent is at least one nucleating agent selected from a group of nucleating agents consisting of sodium stearate, sodium benzoate, sodium acetate, potassium stearate, potassium benzoate, silica nanoparticles, sorbitol based chemicals, micronized sodium benzoate, micronized potassium benzoate, micronized sodium stearates, micronized potassium stearates and talc.

6. A polymeric composition as claimed in claim 1, wherein the nucleating agent is silica nanoparticles in the range of 200 to 400 ppm having a particle size of 40 to 50 nm.

7. A polymeric composition as claimed in claim 1, wherein the nucleating agent is sodium acetate in the range of 50 to 100 ppm.

8. A polymeric composition as claimed in claim 1, wherein the nucleating agent is a mixture of sodium acetate in the range of 50 to 100 ppm and silica nanoparticles in the range of 200 to 400 ppm having a particle size of 40 to 50 nm.

9. A polymeric composition as claimed in claim 1, wherein the polycondensation catalyst is at least one polycondensation catalyst selected from a group of polycondensation catalysts consisting of antimony, titanium and germanium based compounds or potassium titanium oxide oxalate.

10. A polymeric composition as claimed in claim 1, wherein the polycondensation catalyst is antimony triacetate/trioxide in the range of 150 to 300 ppm.

11. A polymeric composition as claimed in claim 1, wherein the polycondensation catalyst is germanium dioxide in the range of 5 to 40 ppm.

12. A polymeric composition as claimed in claim 1, wherein the polycondensation catalyst is a mixture of antimony triacetate/trioxide in the range of 150 to 300 ppm and antimony triacetate in the range of 150 to 300 ppm.

13. A preform having a polymeric composition as claimed in claim 1.

14. A pasteurizable container having a polymeric composition as claimed in claim1.

15. A method for making PET/PEN copolyester for manufacture of pasteurizable containers comprising the following steps:
a. mixing pure terephthalic acid and monoethylene glycol in an esterification reactor and optionally adding a nucleating agent, a polycondensation catalyst and colorants;
b. mixing naphthalene dicarboxylic acid or naphthalene di carboxylate in an esterification reactor for in-situ PEN formation;
c. conducting the esterification reaction at a temperature of 240 to 265°C for 190 minutes to obtain an esterified pre-polymer;
d. transferring the esterified pre-polymer to a polycondensation reactor;
e. subjecting the pre-polymer to polycondensation at a temperature of 265-292°C under pressure of 5-15 mbar for 180 minutes to obtain a molten amorphous polymer;
f. extruding the molten amorphous polymer under nitrogen pressure to form chips; and
g. subjecting the resulting chips to solid state polymerization to attain an I.V. greater than 0.70 dL/gm.

16. A method for making pasteurizable containers comprising the following steps:
a. subjecting said PET/PEN copolyester as claimed in any one of claims 1 to 13 to injection molding to obtain a preform; and
b. subjecting the preform to stretch blow molding to form a pasteurizable container or bulkfillable jars/containers
c. subjecting said PET/PEN copolyester as claimed in any one of claims 1 to 13 to extrusion blow molding (EBM) to make bottles of odd shapes or injection molding to thicker preforms and stretch blow molding to bulk volume containers/jars.
